# EUROPEAN PATENT APPLICATION

(11) **EP 4 403 779 A1**
(43) Date of publication of application: **24.07.2024**
(21) Application number: 22869467.5
(22) Date of filing: 09.09.2022
(51) Int. Cl.: F04D 27/00, F03D 3/04

(54) **MONITORING MODULE AND SYSTEM FOR MONITORING INDUSTRIAL PROCESSES FOR PREDICTIVE MAINTENANCE**

(30) Priority: 14.09.2021 ES 202100099
(71) Applicant: Alternative Energy Innovations, S.L., 08224 Terrassa (Barcelona) (ES)
(72) Inventor: ARAGONES ORTIZ, Raul, 08224 Terrassa ( Barcelona) (ES); COMELLAS VOGEL, David, 08224 Terrassa ( Barcelona) (ES); MALET MUNTÉ, Roger, 08224 Terrassa ( Barcelona) (ES); IBANEZ FRIAS, Andres, 08224 Terrassa ( Barcelona) (ES)
(74) Representative: Pons
(86) International application number: PCT/ES2022/000034
(87) International publication number: WO 2023/041816

(57) **Abstract**

The invention relates to a monitoring module specially designed to be installed in motors of industrial fans, railway fans or tunnel fans, which operates without batteries or wiring, powered by wind energy, and which comprises a wind turbine and at least one sensor designed to measure at least one operational parameter of a driven motor, and to a corresponding system including the module.

## Description

### Technical field of the invention

The present invention relates to a monitoring module specially designed to be installed in motors of industrial fans, which in turn is also part of the new system for monitoring industrial processes for predictive maintenance.

### Background of the invention

Currently one of the most widely used ways to know the status of motors of, for example, industrial fans, is the use of accelerometers. This allows the application of predictive maintenance techniques. The problem is that, for their operation, these devices need energy and a communication system that allows data to be extracted for analysis. Usually these systems are powered by cable or batteries. In the first case, it is not always easy to find where to connect the measurement system; in general, the cables of the motor to be monitored cannot be bridged, for example. This often involves expensive electrical installations to power these sensors, so only the critical motors end up being monitored.

The battery option has other drawbacks, the most obvious being that they must be replaced periodically, with the material and logistical cost that this entails. The second drawback is an environmental issue. Lithium batteries are typically used, where lithium is a rare and polluting metal which also requires a huge amount of water for its extraction (2 million litres of water for each tonne of lithium). Also, for these batteries it is necessary to use cobalt, a highly polluting element that causes serious environmental problems at the time of its extraction. There is the additional problem that the issue of recycling these batteries when they reach the end of their service life is not resolved.

The thousands of motors for fans used, for example in road or railway tunnels, are a good example of this. In most of these motors, their condition is not monitored and the moment they break down, they are fixed, and if this cannot be done, they are changed. In some cases, however, not only do they break down, but are also destroyed, falling onto the road or thoroughfare, with the danger that the detachment of said motors may entail for vehicles circulating on said thoroughfares or roads. What is usually done, more or less often, is manual monitoring: a maintenance operator performs periodic inspections, keeping a record of the results.

The inventors of the present development have considered the solutions that have been carried out so far to realise that they had to find a solution that would take a completely radical turn. That is why they studied the air flows that these motors generate and hereinafter will present a solution that harnesses the energy of this air. Thus, taking into account the current state of the art, the objective of the present invention is to achieve a monitoring module that is capable of generating sufficient energy to power electronic devices or industrial sensors by harnessing the air flows of the motor itself that is to be monitored.

Another objective of the present invention is to offer a new system for monitoring for predictive maintenance by harnessing air flows, as described in the present invention, that works without batteries or wiring, powered by wind energy. The fact that it is a device that generates its own energy allows for Edge computing, integrating machine learning algorithms into the node itself.

### Description of the invention

In order to provide a technical solution for the harnessing of air flows from fans, especially for industrial fans, railway fans and/or tunnel fans, for example, for roads, and the growing need to monitor various operational parameters of the fans; the invention discloses a monitoring module specially designed to be installed in motors of railway fans or tunnel fans, characterised in that it essentially comprises a wind turbine and at least one sensor designed to measure at least one operational parameter of the monitored motor. With this configuration that will be presented below, it allows this monitoring without the need for additional wiring or batteries.

Advantageously, by arranging said monitoring module on the motor of said fan, it is possible to harness the air flow of the same fan for the generation of electrical energy that can be used by the same monitoring module and therefore the sensor to be able to monitor different parameters and to communicate same to a control post. By means of this configuration, it is achieved that, even if another element is added to the ventilation motor, the operation thereof is not altered and it is possible to monitor different operational parameters in order to act predictively in the maintenance of said motors without the need to add additional wiring for powering same, nor the need to use any battery.

According to another feature of the invention, the monitoring module is characterised in that the wind turbine is formed by at least some blades and a casing that houses therein said wind turbine and an electronic power, control and communication system of the assembly. According to a preferred embodiment, the blades of the wind turbine are Giromill type blades, and in another variant also contemplated, they are Savonius type blades, or another type of equivalent blades. According to another feature of the invention, the wind turbine is a permanent magnet generator or a brushless generator, or any other equivalent motor/generator topology.

Advantageously, by means of this type of wind turbine, it is possible to harness any air flow regardless of the direction and strength without the need to take up much space and without altering the installation where the aforementioned monitoring module is located.

According to another feature of the invention, the monitoring module is characterised in that the electronic system comprises a DC/DC converter with a start-up voltage of less than 2.5 volts and capable of reaching values of up to 15 volts at the input while maintaining a fixed voltage of 5 volts at the output. The system has a system to control the activation of the supply voltage of the control and communication system. The system accumulates energy in a supercapacitor, and when it has sufficient accumulated energy, it activates the contribution of energy to the system. For practical purposes, until the voltage of the supercapacitor reaches 4.7 volts, the system remains without energy, and it stays that way until the voltage drops below 3 volts. As a result of this ignition control, a large amount of energy is not necessary for operation thereof, maintaining the operating energy at all times.

According to a preferred embodiment of the invention, the monitoring module is characterised in that the electronic system comprises a supercapacitor designed to accumulate the energy coming from the converter. This supercapacitor allows energy to be delivered during consumption peaks that may occur in communications. As mentioned, a system has been designed to mark the voltage of the supercapacitor at which the system starts up, and the voltage at which it shuts down. This prevents the system from being able to be in an unstable state due to inadequate supply voltage.

According to other features of the invention, the electronic system controls the energy generated and the monitoring module may comprise a system-on-chip (SoC) to control communications and data acquisition. It is furthermore contemplated that the monitoring module is provided with fastening means for both the sensor and the generator.

According to another aspect of the invention, in order to provide a solution for monitoring motors of industrial fans, railway fan motors or tunnel fans for predictive maintenance by harnessing air flows, a system for monitoring industrial processes for predictive maintenance is disclosed, characterised in that it comprises at least one monitoring module according to any one of claims 1 to 11 that generates sufficient energy to power electronic devices or industrial sensors of the machine or motor that is to be monitored.

Advantageously, this system of the invention makes it is possible to monitor any motor of any fan without energy input by using the residual air flow of the motor or fan itself where said system is applied.

According to another feature of the invention, the system is characterised in that it also comprises an loT node to communicate and transmit the data obtained from the electronic device or industrial sensor of the machine itself that is monitored.

Advantageously, by generating its own energy, the node can have machine learning algorithms to improve predictive maintenance, which prevents sending a lot of data to the cloud and saturating the radio spectrum.

Furthermore, according to a preferred embodiment, the system is intended to comprise an analogue power control of the SoC, connecting or disconnecting the voltage of the system to charge a supercapacitor even if the energy generated is very low, such as less than the consumption of low-consumption operation. Advantageously, a very interesting solution for predictive maintenance in industrial environments, without requiring additional energy consumption, is achieved by means of this system.

### Brief description of the drawings

To complete the description that is being made and in order to facilitate the understanding of the features of the invention, a set of drawings is attached to this specification which illustrate, by way of non-limiting example, an embodiment of the monitoring module and the system of the invention. Specifically, the following is depicted:
Figure 1 is a schematic perspective view of the monitoring module coupled to the motor of a fan of a road tunnel;
Figure 2 is a schematic view of the wind turbine of the monitoring module;
Figure 3 is an exploded view of the wind turbine of Figure 2; and
Figure 4 is a schematic view of the system of the invention of the monitoring module depicted in the preceding figures.

### Detailed description of the drawings

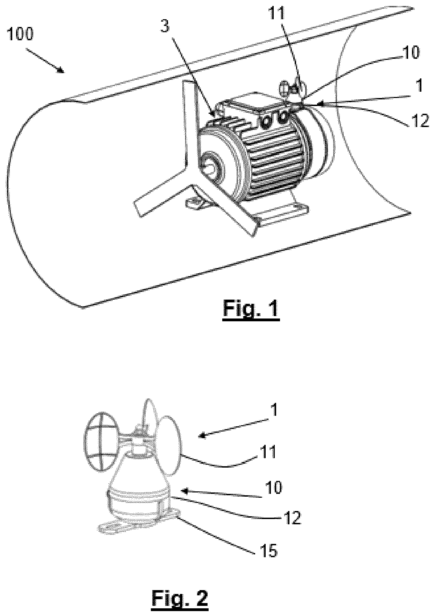

Figure 1 shows a monitoring module 1 installed in the motor 3 of a fan of a road tunnel. Said monitoring module 1 comprises a wind turbine 10 and at least one sensor, not depicted, which may be inside the node or connected externally, designed to measure an operational parameter of the motor 3, which in this case is vibrations, and depending on said parameter, greater friction or imbalance may be associated and imply wear that could soon deteriorate the operation thereof, among other problems.

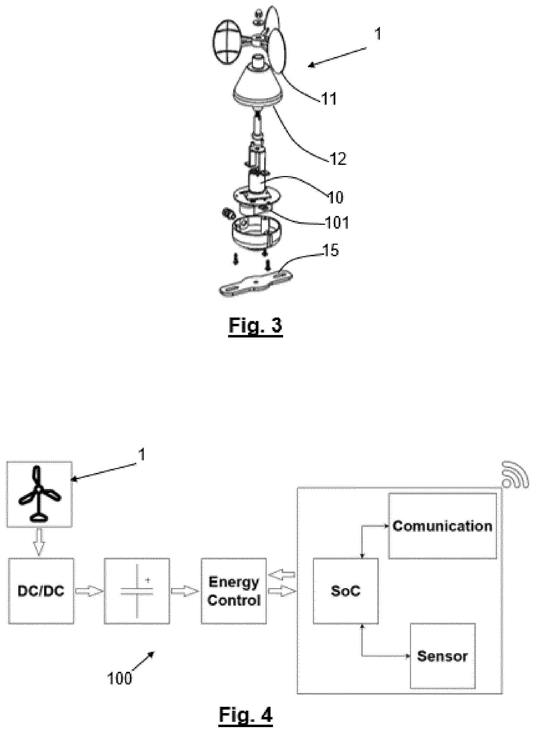

As can be seen in Figures 2 and 3, the wind turbine 10 is formed by some blades 11 and a casing that houses therein said generator 10 and an electronic power, control and communication system of the assembly, which will be explained later.

The blades 11 of the wind turbine 10 are of the Giromill rotor type, which consist of vertical blades attached to the shaft by horizontal arms that emerge from the ends of the blade. Vertical blades of this type change their orientation as the rotor rotates for greater harnessing of the force of the wind. In this case, the blades are made up of ribs that allow the thickness of the blades to be reduced, while maintaining resistance. Weight is also thereby reduced.

The advantage of this type of configuration of the blade 11 allows winds to be harnessed, even if such winds are of low force or from different directions and orientations. The turbine 10 can be permanent magnet or brush generators.

To facilitate the installation of said monitoring module 1, it is provided with fastening means 15, both for the sensor and for the generator, so that they are securely fastened to the motor that is being monitored.

As indicated, the monitoring module 1 comprises an electronic system formed by a DC/DC (direct current - direct current) converter with a start-up (ignition) voltage of less than 2.5 volts and capable of reaching values of up to 15V at the input while maintaining a fixed voltage of between 5 volts at the output. Reading this description of the electronic system can be accompanied by the diagram depicted in Figure 4. The mentioned electronic system that controls the generated energy is provided with at least one supercapacitor designed to accumulate the energy that comes from the converter. Furthermore, a system-on-chip (SoC) is implemented to control communications and data acquisition.

The assembly of said monitoring module 1 with its corresponding electronics allow a system for monitoring industrial processes for predictive maintenance to be provided. By means of said monitoring module 1, sufficient energy is generated to power the electronic devices and sensors comprised in the monitored motor. An loT node (101) is further added to communicate and transmit the data obtained from the monitoring module 1 of the electronic device and sensor of the motor itself that is monitored.

Since this system for monitoring is provided with an analogue control of the SoC power supply, it allows the voltage of the system to be connected and disconnected, so that the supercapacitor is charged even if the energy generated is very low, assuring that it will not stop working while the machine is in operation. The system has a system to control the activation of the supply voltage of the control and communication system. The system accumulates energy in a supercapacitor, and when it has sufficient accumulated energy, it activates the contribution of energy to the system. For practical purposes, until the voltage of the supercapacitor reaches 4.7 volts, the system remains without energy, and it stays that way until the voltage drops below 3 volts. As a result of this ignition control, a large amount of energy is not necessary for operation thereof, maintaining the operating energy at all times.

By means of this configuration, it is achieved that, even by adding another element, the monitoring module itself on the ventilation motor to be monitored, the operation thereof is not altered and it is possible to monitor different operational parameters to be able to act predictively in the maintenance of said motors without the need to add additional wiring for the power supply thereof, nor the need to use any battery, by harnessing the air flow from the same fan that is converted into sufficient energy for said monitoring module and that accumulates in said supercapacitor to guarantee constant operation thereof by controlling the electronic system itself.

## Claims

1. A monitoring module (1) specially designed to be installed in motors of industrial fans, railway fans or tunnel fans, **characterised in that** it comprises a wind turbine (10) and at least one sensor (2) designed to measure at least one operational parameter of the monitored motor (3).

2. The monitoring module (1) according to the preceding claim, **characterised in that** the wind turbine (10) is formed by at least some blades (11) and a casing (12) that houses therein said wind turbine and an electronic power, control and communication system of the assembly.

3. The monitoring module (1) according to the preceding claim, **characterised in that** the blades (11) of the wind turbine (10) are Giromill type blades.

4. The monitoring module (1) according to claim 2, **characterised in that** the blades (11) of the wind turbine (10) are Savonius type blades.

5. The monitoring module (1) according to any one of claims 2 to 4, **characterised in that** the wind turbine (10) is a permanent magnet generator.

6. The monitoring module (1) according to any one of claims 2 to 4, **characterised in that** the wind turbine (10) is a brushless generator.

7. The monitoring module (1) according to any one of claims 2 to 8, **characterised in that** the electronic system comprises a DC/DC converter with a start-up voltage of less than 2.5 volts and capable of reaching values of 15 volts at the input while maintaining a fixed voltage of between 5 volts at the output.

8. The monitoring module (1) according to the preceding claim, **characterised in that** the electronic system comprises a supercapacitor designed to accumulate the energy that comes from the converter.

9. The monitoring module (1) according to the preceding claim, **characterised in that** the electronic system controls the generated energy.

10. The monitoring module (1) according to the preceding claim, **characterised in that** it comprises a system-on-chip (SoC) to control communications and data acquisition.

11. The monitoring module (1) according to any one of the preceding claims, **characterised in that** it is provided with fastening means (15), both for the sensor and for the generator.

12. A system (100) for monitoring industrial processes for predictive maintenance, **characterised in that** it comprises at least one monitoring module (1) according to any one of claims 1 to 11 that generates sufficient energy to power electronic devices or industrial sensors of the machine or motor itself that is to be monitored.

13. The system (100) for monitoring according to the preceding claim, **characterised in that** it also comprises an loT node (101) to communicate and transmit the data obtained from the monitoring module (1), electronic device or industrial sensor of the machine or motor itself that is monitored.

14. The system (100) for monitoring according to the preceding claim, **characterised in that** it comprises analogue control of the SoC power supply, connecting or disconnecting the voltage of the system to charge a supercapacitor even if the energy generated is very low, such as lower than the consumption of low-consumption operation.
